# FASCICULE DE BREVET EUROPEEN

(11) **EP 1 934 552 B1**
(45) Date de publication et mention de la délivrance du brevet: **14.12.2016**
(21) Numéro de dépôt: 06820197.9
(22) Date de dépôt: 12.10.2006
(51) Int. Cl.: G01B 11/06

(54) **PROCEDE ET DISPOSITIF DE MESURE DE HAUTEURS DE MOTIFS**
VERFAHREN UND VORRICHTUNG ZUR HÖHENMESSUNG VON MUSTERN
METHOD AND DEVICE FOR MEASURING HEIGHTS OF PATTERNS

(30) Priorité: 14.10.2005 FR 0510530
(43) Date de publication de la demande: 25.06.2008
(73) Titulaire: Nanotec Solution, 30900 Nîmes (FR)
(72) Inventeur: COURTEVILLE, Alain, F-30111 Congenies (FR)
(74) Mandataire: Pontet Allano & Associes
(86) Numéro de dépôt international: PCT/FR2006/002296
(87) Numéro de publication internationale: WO 2007/042676

(56) Documents cités:
- EP-A- 0 708 307
- US-A- 4 358 201
- US-A- 4 770 532
- US-A- 5 581 345
- OOKI H ET AL: "LASER SCANNING MODE INTERFERENCE CONTRAST MICROSCOPE AND ITS APPLICATION TO STEP HEIGHT MEASUREMENT" JAPANESE JOURNAL OF APPLIED PHYSICS, JAPAN SOCIETY OF APPLIED PHYSICS, TOKYO, JP, vol. 32, no. 11A, PART 1, novembre 1993 (1993-11), pages 4998-5001, XP002028936 ISSN: 0021-4922

## Description

### Domaine technique

La présente invention concerne un procédé de mesure de hauteurs de motifs d'un objet. Elle concerne également un dispositif mettant en oeuvre ce procédé. On entend par mesure de hauteurs de motifs la mesure de la ou des hauteurs d'un ou plusieurs motifs. Par exemple, on peut mesurer pour un motif en marches d'escalier une hauteur par marche.

Le domaine de l'invention est celui de la mesure de hauteurs de motifs d'un objet dont la surface est structurée et réfléchie la lumière. Un exemple plus précis et nullement limitatif de domaine d'application parmi d'autres peut être celui de la lithographie et de la gravure de micros motifs sur des plaques de silicium.

### Etat de la technique antérieure

Le développement des microsystèmes (ou MEMS, pour " Micro-Electro-Mechanical Systems") nécessite la mise en oeuvre de procédés de gravure permettant d'effectuer des gravures de motifs profonds, de quelques dizaines à quelques centaines de microns de profondeur, notamment dans des plaques de silicium, d'oxyde de silicium et de composés III-V tel que l'Arséniure de Gallium. La gravure profonde par plasma fait partie de ces procédés.

La gravure par plasma consiste à effectuer une attaque sélective, au moyen d'un plasma de gaz généré dans un vide partiel, des parties d'une plaque non protégée par un masque de résine ou d'aluminium. On peut ainsi obtenir avec une grande précision des motifs présentant des facteurs de forme (définis comme le rapport de la profondeur du motif sur la largeur dudit motif) importants et des flancs très raides. Toutefois, un certain nombre de problèmes se pose pour ce type de gravure, dont la détermination de la fin de l'attaque, ou en d'autres termes la détermination de l'instant où les motifs ont atteint leur profondeur requise. Cette détermination est complexe. En effet, le temps de gravure nécessaire pour obtenir des motifs aux facteurs de forme souhaités dépend, entre autres, des caractéristiques physico-chimiques du plasma, et de la nature de la plaque. De plus, cette détermination est cruciale en ce que la résolution souhaitée de la profondeur pour ce type de gravure peut être de l'ordre du micron.

Certains procédés de mesure de hauteurs de motifs existent, mais ne donnent pas entièrement satisfaction. Parmi eux, on peut citer:
- les procédés de mesure à base d'interférométrie laser incrémentale,
- les procédés de mesure basés sur de l'ellipsométrie spectroscopique en incidence normale, et
- les procédés de mesure basés sur de l'interférométrie à faible cohérence et sur une division d'amplitude due à des réflexions partielles sur des interfaces successives.

Les procédés de mesure à base d'interférométrie laser incrémentale, sont mis en oeuvre en général par des dispositifs comprenant un interféromètre de type Michelson, et comprennent une mesure de la variation de phase d'un signal interférométrique due à la variation de la hauteur du point de contact d'un faisceau de mesure sur la surface d'un objet. Ces procédés de mesure sont difficilement applicables à la gravure profonde plasma car ils ne comprennent pas à proprement parler des mesures d'épaisseurs ou de hauteurs, mais des mesures de déplacements relatifs de la surface de l'objet par rapport au bâti du dispositif de mesure. Ces procédés de mesure sont donc sensibles aux déplacements, vibrations, qui peuvent être relativement importants dans un procédé de gravure plasma. Ainsi, le procédé divulgué par le brevet US6580515B1 est basé sur une mesure de la différence de trajet optique entre deux faisceaux incidents sur la surface d'un objet en deux points de mesure distincts, un point pouvant être situé dans une zone intacte de l'objet et l'autre point pouvant être situé au fond d'un motif gravé. Du fait d'une part de la distance entre l'interféromètre et l'objet, qui fait usuellement quelques centaines de millimètres, et d'autre part de la diffraction des faisceaux incidents, la taille des points de mesure est de l'ordre de quelques dizaines de microns, ce qui ne permet pas la mise en oeuvre de ces procédés pour la mesure de motifs étroits.

Les procédés de mesure basés sur de l'ellipsométrie spectroscopique en incidence normale, connue aussi sous le nom d' "Optical Critical Dimension (OCD) metrology", permettent de déterminer la structure de motifs périodiques d'un objet à partir des propriétés spectrales et polarimétriques de la lumière rétro diffusée par la structure, et leur utilisation est donc restreinte à des motifs périodiques. De plus, leur efficacité est très dépendante des motifs. Un tel procédé de mesure est par exemple divulgué dans le brevet WO 02/15238A2.

Les procédés de mesure basés sur de l'interférométrie à faible cohérence sont en général mis en oeuvre par un dispositif comprenant un interféromètre de Michelson, illuminé cette fois par une source optique à spectre large. En utilisant des longueurs d'ondes pour lesquelles l'objet est transparent, il est possible de mesurer directement des épaisseurs de matière en effectuant dans l'interféromètre la corrélation optique de la lumière rétrodiffusée par les faces supérieures et inférieures de l'objet avec un faisceau de référence issu d'une même source et dont on fait varier le trajet optique au moyen d'une ligne à retard. Lorsque l'on a une égalité de chemins optiques entre la réflexion sur une des faces de la plaque et le faisceau de référence, on obtient sur un détecteur un pic d'interférences qui permet de localiser ainsi l'interface. La localisation de deux interfaces permet ainsi de déduire l'épaisseur locale d'une plaque. Ces procédés sont donc basés sur une division d'amplitude due à des réflexions partielles sur des interfaces successives. La mise en oeuvre générale de ce type de procédé est notoirement connue de longue date, et on peut en trouver un exemple appliqué à la problématique de la gravure chimique dans le brevet EP 1 296 367A1.

Le document EP-A-708 307 divulgue un procédé et un dispositif de mesure de hauteurs de motifs d'un objet.

Le but de l'invention est de proposer un procédé et un dispositif de mesure de hauteurs de motifs d'un objet, applicable :
- à des motifs étroits ou larges,
- à des motifs périodiques ou non périodiques,
- in situ, en direct et en temps réel, par exemple au cours d'une gravure, et
- sur des objets ne comprenant pas nécessairement plusieurs interfaces optiques.

### Exposé de l'invention

Cet objectif est atteint avec un procédé de mesure de hauteurs de motifs d'un objet, selon la revendication 1, comprenant :
- une émission de lumière, ladite lumière comprenant un mode de propagation d'intérêt pour au moins une longueur d'onde d'intérêt, la lumière émise pouvant donc être monochrome ou polychrome, et pouvant comprendre, pour les longueurs d'onde d'intérêt ou d'autres longueurs d'onde, d'autres modes de propagation que le mode de propagation d'intérêt,
- une illumination, par la lumière, de la surface dudit objet,
- une réflexion, par la surface de l'objet, de la lumière,
- une collection de la lumière réfléchie, qui comprend en outre :
- une division de front d'onde de la lumière réfléchie en composantes de division, par au moins un motif de la surface illuminée,
- un filtrage de la lumière collectée, et
- à partir de la lumière filtrée, et pour les longueurs d'onde d'intérêt, une extraction d'informations de différences de phase entre les composantes de division ; ces différences de phase sont représentatives de différences de marche entre les composantes de division, et donc de différences entre des hauteurs du ou des motifs illuminés.

Dans le cas d'une émission d'une pluralité de longueurs d'onde d'intérêt, ces longueurs d'onde peuvent être émises simultanément ou au cours d'un balayage temporel en longueur d'onde. De plus, ces longueurs d'onde peuvent être discontinues ou peuvent former un continuum de longueur d'onde sur un intervalle de longueur d'onde.

On entend par illumination par exemple une focalisation ou une collimation de la lumière émise, le faisceau de lumière incident à la surface de l'objet pouvant être un faisceau de lumière parallèle ou non.

Le filtrage peut comprendre un filtrage modal supprimant pour les longueurs d'onde d'intérêt tous les modes autres que le mode de propagation d'intérêt.

De manière préférentielle, le mode de propagation d'intérêt consiste en un mode transverse (ou "transverse electric and magnetic (TEM) mode") fondamental TEM₀₀.

L'illumination par la lumière peut être en incidence normale par rapport à la surface de l'objet.

Le procédé selon l'invention peut comprendre en outre un déplacement de l'illumination sur la surface de l'objet.

L'émission de lumière peut comprendre :
- une émission d'une pluralité de modes de propagation pour une pluralité de longueurs d'ondes, et
- un filtrage modal supprimant pour les longueurs d'onde d'intérêt tous les modes autres que le mode de propagation d'intérêt.

Le procédé selon l'invention peut être réalisé au cours d'une opération de gravure de motifs sur l'objet. Le procédé selon l'invention est en effet réalisable au cours d'une gravure, in situ, en temps réel et en direct.

Le procédé selon l'invention peut comprendre en outre une détermination d'un temps de fin de gravure, pour le contrôle et l'arrêt d'une opération de gravure, à partir du suivi de l'évolution de gravure d'un ou plusieurs motifs de l'objet, ou pour la mise au point d'un protocole de gravure; le temps de fin de gravure déterminé peut alors servir à réaliser d'autres gravures dans des conditions expérimentales identiques sans avoir à mesurer in situ et en temps réel des hauteurs de motifs.

Suivant encore un autre aspect de l'invention, il est proposé un dispositif de mesure de hauteurs de motifs d'un objet, selon la revendication 8, mettant en oeuvre un procédé selon l'invention, et comprenant :
- des moyens d'émission de lumière, ladite lumière comprenant un mode de propagation d'intérêt pour au moins une longueur d'onde d'intérêt,
- des moyens de guidage aller de la lumière,
- des moyens d'illumination, par la lumière, de la surface dudit objet réfléchissant la lumière,
- des moyens de collection de la lumière réfléchie,
- des moyens de guidage retour de la lumière collectée,
qui comprend en outre :
- des moyens de filtrage de la lumière collectée, et
- des moyens de d'extraction, à partir de la lumière filtrée, et pour les longueurs d'onde d'intérêt, d'informations de différences de phase entre des composantes d'une division de front d'onde de la lumière réfléchie; ces différences de phase sont représentatives de différences de marche entre les composantes de division, et donc de différences entre des hauteurs du ou des motifs illuminés.

Les moyens de filtrage peuvent comprendre des moyens de filtrage modal de la lumière collectée, supprimant pour les longueurs d'onde d'intérêt tous les modes autres que le mode de propagation d'intérêt.

L'objet peut consister, entre autres, en une plaque de silicium, d'oxyde de silicium, d'un composé III-V tel que l'Arséniure de Gallium, ou en tout autre objet micro ou macroscopique dont la surface est structurée et réfléchie la lumière.

Le dispositif selon l'invention peut comprendre en outre des moyens de déplacement de l'illumination sur la surface de l'objet.

Les moyens de guidage aller et retour peuvent comprendre des fibres optiques monomodes.

Les moyens d'illumination et les moyens de collection peuvent être confondus, et le dispositif selon l'invention peut comprendre en outre un coupleur, une jonction Y ou un circulateur séparant la lumière émise et la lumière collectée.

Les moyens d'extraction peuvent comprendre un interféromètre de Michelson.

Le dispositif selon l'invention peut comprendre en outre :
- une caméra focalisée sur l'objet,
- des moyens d'éclairage en lumière blanche de l'objet, et
- des moyens d'émission d'un faisceau laser de pointage de zone de mesure, émettant dans le visible.

Dans une forme de réalisation, le dispositif selon l'invention peut être couplé à des moyens de gravure de motifs. Le dispositif selon l'invention peut alors comprendre en outre des moyens de détermination d'un temps de fin de gravure. Les moyens de gravure peuvent comprendre un dispositif de gravure plasma.

Le dispositif selon l'invention peut aussi être appliqué à une mesure de hauteurs de marches entre des miroirs d'un miroir segmenté, comme un miroir segmenté de télescope par exemple.

L'originalité de cette méthode, par comparaison à l'interférométrie à faible cohérence classique réside dans le fait que l'on exploite la division et le codage du front d'onde par au moins un motif, que l'on recode ensuite en retard optique pur par le biais d'un filtrage, et non pas une division d'amplitude due à des réflexions partielles sur des interfaces successives, comme c'est le cas de manière classique. Une conséquence importante de cela est que la mesure de hauteurs devient possible pour des motifs dont la taille est inférieure à la largeur du faisceau incident, ce qui est toujours le cas à cause de la diffraction lorsqu'une optique focalisant ou collimatant la lumière sur l'objet est à plusieurs centaines de millimètres de l'objet. Ainsi donc c'est précisément cette originalité qui rend la méthode particulièrement intéressante pour le contrôle de gravure dans un dispositif de gravure par plasma, du fait de la structure des machines qui interdit toute mesure à courte distance.

Il est à noter d'ailleurs qu'un dispositif de mesure selon l'invention permet également de faire des mesures d'épaisseur de manière classique par division d'amplitude, ce qui permet, en une seule mesure, de déterminer la hauteur d'un motif et l'épaisseur de matière restante.

### Rescription des figures et modes due réalisation

D'autres avantages et caractéristiques de l'invention apparaîtront à l'examen de la description détaillée de mises en oeuvre nullement limitatives, et des dessins annexés suivants :
- la figure 1 illustre le principe d'un procédé de mesure de hauteurs de motifs selon l'invention,
- la figure 2 illustre un dispositif de mesure selon l'invention, et
- la figure 3 illustre une application d'un dispositif de mesure selon l'invention à la gravure plasma.

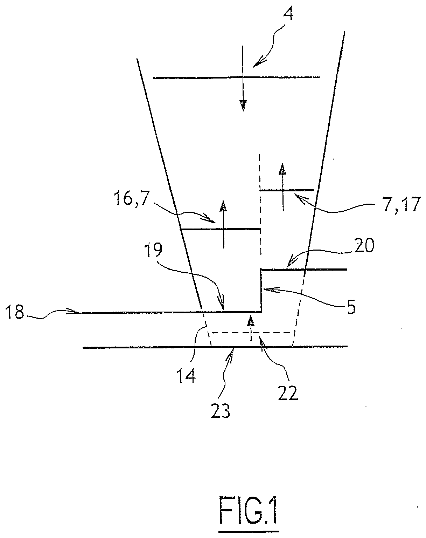

On va tout d'abord décrire, en référence à la figure 1, le principe d'un procédé de mesure de hauteurs de motifs selon l'invention. L'objet sur lequel sont gravés des motifs peut par exemple consister en une plaque de silicium. De manière générale, cet objet peut consister en n'importe quel objet ayant une surface structurée et réfléchissant la lumière.

Un tel procédé est basé sur une mesure directe de hauteurs d'au moins un motif par division de front d'onde et filtrage modal d'un faisceau optique réfléchi par le motif. Un faisceau de lumière mono ou polychromatique est émis. La lumière comprend pour au moins une longueur d'onde d'intérêt un mode de propagation d'intérêt. Ce faisceau est guidé puis focalisé ou collimaté sur une surface d'un objet 14 porteur d'au moins un motif 5 gravé à sa surface. De manière préférentielle, le faisceau de lumière incident à la surface de l'objet comprend un unique mode transverse fondamental TEM₀₀, pour un intervalle continu de longueurs d'onde d'intérêt infra rouge. Toujours de manière préférentielle, le front d'onde incident à la surface de l'objet est plan et parallèle à la surface. La taille du "point" de focalisation à la surface, limitée par la diffraction, est typiquement de quelques dizaines de microns.

Le procédé comprend ensuite une réflexion de la lumière incidente 4 par la surface supérieure 18 de l'objet. Si le point de focalisation recouvre un motif 5, la réflexion comprend une division du front d'onde de la lumière, en fonction de la profondeur où se produit localement la réflexion. Ainsi le lumière réfléchie 7 est constituée de plusieurs composantes de division, de fronts d'ondes plans, et qui peuvent être considérées comme autant d'ondes avec des différences de phase proportionnelles aux différences de distance parcourue avant réflexion. Dans le cas simple illustré sur la figure 1, ou le motif 5 est une simple marche, une zone basse 19 et une zone haute 20 de la surface supérieure 18 de l'objet sont à l'origine de deux composantes de division 16 et 17 de la lumière réfléchie. Ces deux composantes ont une différence de phase qui augmente avec la hauteur du motif. Si l'objet comprend une interface 23 sous le motif 5, une réflexion supplémentaire 22 due à l'interface peut apparaître.

La lumière réfléchie est ensuite collectée. Le procédé comprend alors un filtrage modal et un guidage retour de la lumière collectée. Le filtrage modal supprime de la lumière collectée, pour les longueurs d'onde d'intérêt, tous les modes autres que le mode de propagation d'intérêt. Le procédé comprend alors, à partir de la lumière filtrée, une extraction d'informations de différences de phase entre les différentes composantes de division, aux longueurs d'onde d'intérêt.

L'objet peut consister, entre autres, en une plaque de silicium, d'oxyde de silicium ou d'un composé III-V tel que l'Arséniure de Gallium, ladite plaque comprenant à sa surface des micromotifs gravés par lithographie.

L'objet peut aussi consister en un miroir segmenté, de télescope par exemple, constitué d'une pluralité de miroirs disposés côte à côte. Pour que la surface du miroir segmenté soit parfaite, les miroirs doivent avoir des différences de hauteurs sensiblement nulles au niveau de leurs jonctions. Une légère différence de hauteur au niveau d'une jonction entre deux miroirs du miroir segmenté se traduit par une petite marche, dont la hauteur est mesurable par le procédé selon l'invention. Ainsi, le domaine de l'invention est de manière générale la mesure de hauteurs de motifs d'un objet dont la surface est structurée et réfléchie la lumière.

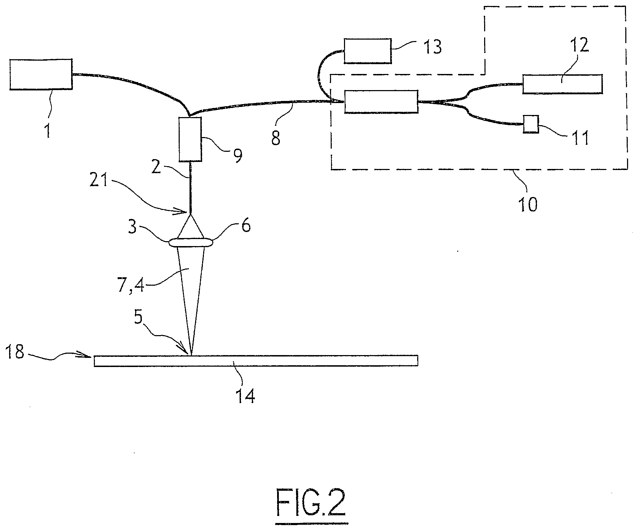

Nous allons maintenant décrire, en référence à la figure 2, un exemple de dispositif de mesure selon l'invention. Le dispositif de mesure comprend des moyens d'émission 1 de lumière qui émettent une lumière polychromatique. De manière préférentielle, les moyens d'émission comprennent une diode superluminescente émettant dans l'infra rouge un continuum de longueurs d'onde d'une trentaine de nanomètres de largeur. La source est couplée à des moyens de guidage aller 2 de la lumière de type fibre optique ou guide d'onde, ou équivalent ne permettant que la propagation du mode de propagation d'intérêtpour les longueurs d'onde d'intérêt émises par la source. Des moyens d'illumination 3 comme une optique de collimation permettent de focaliser le faisceau de lumière incidente 4 sur un motif 5 dont on cherche à mesurer la ou les hauteurs, ledit motif étant gravé à la surface d'un objet 14. L'optique de collimation est ajustée de telle sorte que le plan de l'extrémité 21 des moyens de guidage aller 2 et la surface 18 de l'objet sont conjugués, ou en d'autres termes images l'un de l'autre par l'optique de collimation. Dans ce cas, le front d'onde incident à la surface de l'objet est plan.

Comme il a été décrit précédemment, la lumière réfléchie 7 par la surface est constituée de différentes composantes, de fronts d'ondes plans et avec des différences de phase. Ces ondes réfléchies sont couplées par des moyens de collection 6 (comme une optique de collection) dans des moyens de guidage retour 8. Les moyens de guidage retour consistent en un guide d'onde de nature équivalente aux moyens de guidage aller. Chaque composante va générer par couplage électromagnétique dans le guide une onde dans le mode de propagation d'intérêt (le seul possible) qui va ne conserver que la phase moyenne de l'onde collectée. Ainsi les moyens de guidage retour jouent un rôle de moyens de filtrage modal et permettent de rejeter les hautes fréquences de l'onde collectée pour ne conserver que l'information de phase qui nous intéresse.

La lumière collectée et filtrée est ensuite dirigée vers des moyens de d'extraction, pour les longueurs d'onde d'intérêt et le mode de propagation d'intérêt, d'informations de différences de phase entre les composantes de division. Les moyens d'extraction comprennent un corrélateur optique 10, qui est typiquement mais de manière non limitative un interféromètre de Michelson avec un bras réflecteur de longueur fixe 11, et un bras de longueur variable 12 (aussi appelé ligne à retard) basé sur un miroir mobile. Le signal d'interférences résultant est détecté par un détecteur 13. Lorsqu'on reproduit entre les deux bras du Michelson un retard optique équivalent à celui existant entre des composantes de division issues de réflexions partielles, on obtient sur le détecteur un maximum d'amplitude dans l'enveloppe de l'interférogramme, ou pic d'interférences, pour une position de la ligne à retard correspondant à la différence de hauteur des surfaces ayant engendré les réflexions partielles. Si le point de focalisation recouvre un motif en marche comme illustré sur la figure 1, on détecte sur le signal d'interférences un pic, pour une position de la ligne à retard correspondant à la hauteur de la marche. Si le motif recouvert consiste en deux marches à la suite l'une de l'autre, on détecte sur le signal d'interférences trois pics, pour des positions de la ligne à retard correspondant à la hauteur d'une des deux marches ou de la marche totale. Autrement dit, on détecte trois composantes de division avec des différences de phase.

Selon un mode de réalisation préférentiel, tout le système de guidage aller et retour de la lumière est réalisé en fibres optiques monomodes, qui font en même temps office de filtres modaux quasiment parfaits, ne permettant que la propagation du mode fondamental transverse TEM₀₀.

Toujours selon un mode de réalisation préférentiel, le faisceau incident arrive en incidence normale sur l'objet, et les moyens d'illumination et de collection peuvent être confondus, auquel cas les faisceaux incidents et réfléchis sont séparés par un coupleur, une jonction Y ou un circulateur 9.

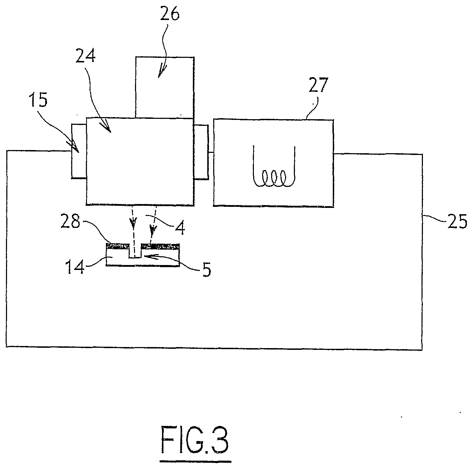

Un dispositif de mesure selon l'invention peur être monté directement sur un dispositif de gravure pour des mesures "in situ" au cours d'une opération de gravure. La figure 3 illustre une application d'un dispositif de mesure selon l'invention à la gravure plasma. Le dispositif de mesure comprend tout d'abord une partie 24, comprenant une partie identique au dispositif illustré sur la figure 2 et comprenant en outre :
- une caméra avec des moyens d'éclairage associés permettant d'imager en lumière blanche une zone de mesure, et
- des moyens d'émission d'un faisceau laser visible de pointage, dans le cas où les mesures par interférométrie utilisent une longueur d'onde d'intérêt non visible, par exemple infrarouge; ce faisceau laser visible permet de pointer et visualiser l'endroit exact de la mesure avec la caméra.

Le dispositif de mesure illustré sur la figure 3 comprend en outre :
- des moyens de déplacement 15 de la partie 24 comprenant les moyens d'illumination, relativement à l'objet 14 ; ces moyens de déplacement peuvent être motorisés ou non, sur deux ou trois axes, et permettent de déplacer le point de mesure de la lumière incidente 4 avec précision sur la surface de l'objet, et
- des moyens 26 d'analyse de mesures ; ces moyens d'analyse peuvent comprendre des moyens logiciel d'analyse de mesures, et des moyens de visualisation de données mesurées ou analysées.

Le dispositif de mesure est couplé à des moyens de gravure comme un dispositif de gravure plasma comprenant :
- une enceinte hermétique 25 contenant l'objet et un gaz pouvant être ionisé sous forme d'un plasma, et
- des moyens de création 27 d'un plasma, comprenant en général une source électrique.

Un masque de résine ou d'aluminium 28 plaqué sur l'objet permet une attaque sélective des parties non protégées de la surface de l'objet, au moyen du plasma de gaz généré dans l'enceinte.

Les moyens d'analyse 26 permettent, à partir d'un suivi temporel des mesures de hauteurs de motifs et éventuellement d'épaisseur de matière restante, une détermination d'un temps de fin de la gravure selon plusieurs critères possibles :
- mesure en temps réel de la profondeur de gravure d'un motif 5 et arrêt de la gravure sur une consigne de profondeur.
- mesure de l'épaisseur initiale à graver et de l'épaisseur restante de gravure et arrêt de la gravure sur une consigne d'épaisseur restante. La mesure d'épaisseur peut être celle d'une couche dans le cas où l'objet est un ensemble de plaques multicouches.

Les applications d'un tel dispositif sont de manière non limitative :
- le contrôle et l'arrêt d'une opération de gravure, à partir du suivi de l'évolution d'un ou plusieurs motifs de l'objet,
- la mise au point d'un protocole de gravure ; le temps de fin de gravure déterminé peut alors servir à réaliser d'autres gravures dans des conditions expérimentales identiques sans avoir à mesurer in situ et en temps réel des hauteurs de motifs.

Bien sûr, l'invention n'est pas limitée aux exemples qui viennent d'être décrits et de nombreux aménagements peuvent être apportés à ces exemples sans sortir du cadre de l'invention. Un dispositif de mesure selon l'invention peut être appliqué à n'importe quel objet structuré réfléchissant la lumière, et à d'autres types de gravure que la gravure plasma.

## Revendications

1. Procédé de mesure de hauteurs de motifs d'un objet, comprenant :
- une émission de lumière, ladite lumière comprenant un mode de propagation d'intérêt pour au moins une longueur d'onde d'intérêt,
- une illumination, par la lumière (4), de la surface (18) dudit objet (14),
- une réflexion, par la surface de l'objet, de la lumière (4),
- une collection de la lumière réfléchie (7),
- une division de front d'onde de la lumière réfléchie en composantes de division (16, 17), par au moins un motif de la surface illuminée,
**caracterisé en ce qu'**il comprend en outre:
- un filtrage de la lumière collectée, comprenant un filtrage modal (8) supprimant pour les longueurs d'onde d'intérêt tous les modes autres que le mode de propagation d'intérêt, de sorte à générer une lumière filtrée et
- une extraction d'informations (10,11,12,13) de différences de phase entre les composantes de division de ladite lumière filtrée, pour les longueurs d'onde d'intérêt.

2. Procédé de mesure selon la revendication 1, **caractérisé en ce que** le mode de propagation d'intérêt consiste en un mode transverse fondamental TEM₀₀.

3. Procédé de mesure selon la revendication 1 ou 2, **caractérisé en ce que** l'illumination par la lumière est en incidence normale par rapport à la surface de l'objet.

4. Procédé de mesure selon l'une des revendications précédentes, **caractérisé en ce qu'**il comprend en outre un déplacement de l'illumination sur la surface de l'objet.

5. Procédé de mesure selon l'une des revendications précédentes, **caractérisé en ce que** l'émission de lumière comprend :
- une émission d'une pluralité de modes de propagation pour une pluralité de longueurs d'ondes, et
- un filtrage modal supprimant pour les longueurs d'onde d'intérêt tous les modes autres que le mode de propagation d'intérêt.

6. Procédé de mesure selon l'une des revendications précédentes, **caractérisé en ce qu'**il est réalisé au cours d'une opération de gravure de motifs sur l'objet.

7. Procédé de mesure selon la revendication 6, **caractérisé en ce qu'**il comprend en outre une détermination d'un temps de fin de gravure.

8. Dispositif de mesure de hauteurs de motifs d'un objet, mettant en oeuvre le procédé selon l'une des revendications précédentes, et comprenant :
- des moyens d'émission (1) de lumière, ladite lumière comprenant un mode de propagation d'intérêt pour au moins une longueur d'onde d'intérêt,
- des moyens de guidage aller (2) de la lumière,
- des moyens d'illumination (3), par la lumière, de la surface dudit objet (14) réfléchissant la lumière,
- des moyens de collection (6) de la lumière réfléchie (7),
- des moyens de guidage retour (8) de la lumière collectée,
**caractérisé en ce qu'**il comprend en outre :
- des moyens de filtrage de la lumière collectée, comprenant des moyens de filtrage modal (8) de la lumière collectée supprimant pour les longueurs d'onde d'intérêt tous les modes autres que le mode de propagation d'intérêt, de sorte à générer une lumière filtrée,
- des moyens d'extraction (10, 11, 12, 13) de ladite lumière filtrée, pour les longueurs d'onde d'intérêt, d'informations de différences de phase entre des composantes d'une division de front d'onde de la lumière réfléchie.

9. Dispositif de mesure selon la revendication 8, **caractérisé en ce qu'**il comprend en outre des moyens de déplacement (15) de l'illumination sur la surface de l'objet.

10. Dispositif de mesure selon la revendication 8 ou 9, **caractérisé en ce que** les moyens de guidage aller (2) et retour (8) comprennent des fibres optiques monomodes.

11. Dispositif de mesure selon l'une des revendications 8 à 10, **caractérisé en ce que** les moyens d'illumination (3) et les moyens de collection (6) sont confondus, et **en ce qu'**il comprend en outre un coupleur, une jonction Y ou un circulateur (9) séparant la lumière émise et la lumière collectée.

12. Dispositif de mesure selon l'une des revendications 8 à 11, **caractérisé en ce que** les moyens d'extraction comprennent un interféromètre de Michelson.

13. Dispositif de mesure selon l'une des revendications 8 à 12, **caractérisé en ce qu'**il comprend en outre :
- une caméra focalisée sur l'objet,
- des moyens d'éclairage en lumière blanche de l'objet, et
- des moyens d'émission d'un faisceau laser de pointage de zone de mesure, émettant dans le visible.

14. Dispositif de mesure selon l'une des revendications 8 à 13, **caractérisé en ce qu'**il est couplé à des moyens de gravure (25, 27, 28) de motifs.

15. Dispositif de mesure selon la revendication 14, **caractérisé en ce qu'**il comprend en outre des moyens de détermination (26) d'un temps de fin de gravure.

16. Dispositif de mesure selon l'une des revendications 14 à 15, **caractérisé en ce que** les moyens de gravure comprennent un dispositif de gravure plasma.

17. Dispositif selon l'une des revendications 8 à 16, **caractérisé en ce qu'**il est appliqué à une mesure de hauteurs de marches entre des miroirs d'un miroir segmenté.

## Patentansprüche

1. Verfahren zur Messung der Höhen von Mustern auf einem Objekt, umfassend:
- eine Lichtemission, wobei das Licht einen relevanten Ausbreitungsmodus für mindestens eine relevante Wellenlänge umfasst,
- eine Beleuchtung der Oberfläche (18) des Objekts (14) mit dem Licht (4),
- eine Reflexion des Lichts (4) über die Oberfläche des Objekts,
- eine Sammlung des reflektierten Lichts (7),
- eine Teilung der Wellenfront des reflektierten Lichts in Teilungskomponenten (16, 17) durch mindestens ein Muster auf der beleuchteten Oberfläche,
**dadurch gekennzeichnet, dass** es außerdem umfasst:
- eine Filterung des gesammelten Lichts, eine modale Filterung (8) umfassend, welche für die relevanten Wellenlängen alle Modi außer den relevanten Ausbreitungsmodus ausfiltert, sodass ein gefiltertes Licht erzeugt wird, und
- eine Extraktion von Informationen (10, 11, 12, 13) über Phasenunterschiede zwischen den Teilungskomponenten des gefilterten Lichts für die relevanten Wellenlängen.

2. Messverfahren nach Anspruch 1, **dadurch gekennzeichnet, dass** der relevante Ausbreitungsmodus aus einem grundlegenden transversalen Modus TEM₀₀ besteht.

3. Messverfahren nach Anspruch 1 oder 2, **dadurch gekennzeichnet, dass** die Beleuchtung mit dem Licht im normalen Einfall zur Oberfläche des Objekts erfolgt.

4. Messverfahren nach einem der vorhergehenden Ansprüche, **dadurch gekennzeichnet, dass** es außerdem eine Verschiebung der Beleuchtung auf der Oberfläche des Objekts umfasst.

5. Messverfahren nach einem der vorhergehenden Ansprüche, **dadurch gekennzeichnet, dass** die Lichtemission umfasst:
- eine Emission einer Vielzahl von Ausbreitungsmodi für eine Vielzahl von Wellenlängen und
- eine modale Filterung, welche für die relevanten Wellenlängen alle Modi außer den relevanten Ausbreitungsmodus ausfiltert.

6. Messverfahren nach einem der vorhergehenden Ansprüche, **dadurch gekennzeichnet, dass** es während eines Ätzvorgangs von Mustern auf das Objekt ausgeführt wird.

7. Messverfahren nach Anspruch 6, **dadurch gekennzeichnet, dass** es außerdem eine Bestimmung eines Zeitpunkts des Endes des Ätzvorgangs umfasst.

8. Vorrichtung zur Messung der Höhen von Mustern auf einem Objekt, welche das Verfahren nach einem der vorhergehenden Ansprüche umsetzt und umfasst:
- Mittel zur Emission (1) von Licht, wobei das Licht einen relevanten Ausbreitungsmodus für mindestens eine relevante Wellenlänge umfasst,
- Mittel zur Lenkung des Lichts hin zum Objekt (2),
- Mittel zur Beleuchtung (3) der das Licht reflektierenden Oberfläche des Objekts (14) mit dem Licht,
- Mittel zur Sammlung (6) des reflektierten Lichts (7),
- Mittel zur Lenkung des vom Objekt ausgehenden (8), gesammelten Lichts,
**dadurch gekennzeichnet, dass** es außerdem umfasst:
- Mittel zur Filterung des gesammelten Lichts, Mittel zur modalen Filterung (8) des gesammelten Lichts umfassend, welche für die relevanten Wellenlängen alle Modi außer den relevanten Ausbreitungsmodus ausfiltern, sodass ein gefiltertes Licht erzeugt wird,
- Mittel zur Extraktion (10, 11, 12, 13) aus dem gefilterten Licht von Informationen über Phasenunterschiede zwischen Komponenten einer Teilung der Wellenfront des reflektierten Lichts für die relevanten Wellenlängen.

9. Messvorrichtung nach Anspruch 8, **dadurch gekennzeichnet, dass** sie außerdem Mittel zur Verschiebung (15) der Beleuchtung auf der Oberfläche des Objekts umfasst.

10. Messvorrichtung nach Anspruch 8 oder 9, **dadurch gekennzeichnet, dass** die Mittel zur Lenkung auf der Hin- (2) und Rückstrecke (8) optische Monomodefasern umfassen.

11. Messvorrichtung nach einem der Ansprüche 8 bis 10, **dadurch gekennzeichnet, dass** die Beleuchtungsmittel (3) und die Sammelmittel (6) ein und dasselbe sind, und dadurch, dass sie außerdem einen Koppler, eine Y-Verzweigung oder einen Zirkulator (9) zur Trennung des emittierten Lichts von dem gesammelten Licht umfasst.

12. Messvorrichtung nach einem der Ansprüche 8 bis 11, **dadurch gekennzeichnet, dass** die Extraktionsmittel ein Michelson-Interferometer umfassen.

13. Messvorrichtung nach einem der Ansprüche 8 bis 12, **dadurch gekennzeichnet, dass** sie außerdem umfasst:
- eine ein Objekt fokussierende Kamera,
- Mittel zur Beleuchtung des Objekts mit Weißlicht, und
- Mittel zur Emission eines Laserbündels zur Anzielung des Messbereichs, welche im sichtbaren Spektralbereich emittieren.

14. Messvorrichtung nach einem der Ansprüche 8 bis 13, **dadurch gekennzeichnet, dass** sie mit Mitteln zum Ätzen (25, 27, 28) von Mustern gekoppelt ist.

15. Messvorrichtung nach Anspruch 14, **dadurch gekennzeichnet, dass** sie außerdem Mittel zur Bestimmung (26) eines Zeitpunkts des Endes des Ätzvorgangs umfasst.

16. Messvorrichtung nach einem der Ansprüche 14 bis 15, **dadurch gekennzeichnet, dass** die Ätzmittel eine Vorrichtung zum Plasmaätzen umfassen.

17. Vorrichtung nach einem der Ansprüche 8 bis 16, **dadurch gekennzeichnet, dass** sie zur Messung der Stufenhöhen zwischen Spiegeln eines segmentierten Spiegels angewendet wird.

## Claims

1. Method for measuring the heights of patterns of an object, comprising:
- a light emission, said light comprising a propagation mode of interest for at least one wavelength of interest,
- an illumination of the surface (18) of said object (14) by the light (4),
- a reflection of the light (4) by the surface of the object, ,
- a collection of the reflected light (7),
- a division of the wavefront of the reflected light into division components (16, 17), by at least one pattern of the illuminated surface,
**characterized in that** it also comprises :
1. a filtering of the collected light, comprising a modal filtering (8) removing, for the wavelengths of interest, all modes other than the propagation mode of interest, so as to provide a filtered light, and
2. from the filtered light, and for the wavelengths of interest, an extraction of information about phase differences between the division components.

2. Measurement method according to claim 1, **characterized in that** the propagation mode of interest consists of a fundamental transverse mode TEM₀₀.

3. Measurement method according to claim 1 or 2, **characterized in that** the illumination by the light is normally incident with respect to the surface of the object.

4. Measurement method according to one of the previous claims, **characterized in that** it also comprises a displacement of the illumination over the surface of the object.

5. Measurement method according to one of the previous claims, **characterized in that** the light emission comprises:
1. an emission of a plurality of propagation modes for a plurality of wavelengths, and
2. a modal filtering removing all modes other than the propagation mode of interest, for the wavelengths of interest.

6. Measurement method according to one of the previous claims, **characterized in that** it is carried out during an operation of etching patterns on the object.

7. Measurement method according to claim 6, **characterized in that** it comprises moreover a determination of an etching end time.

8. Device for measuring the heights of patterns of an object, using the method according to one of the previous claims, and comprising:
1. light emission means (1), said light comprising a propagation mode of interest for at least one wavelength of interest,
2. means for outward guidance (2) of the light,
3. means of illumination (3), by the light, of the surface of said object (14) reflecting the light,
4. means for collecting (6) the reflected light (7),
5. means for return guidance (8) of the collected light,
**characterized in that** it also comprises :
- means for filtering the collected light, comprising modal filtering means (8) of the collected light, removing, for the wavelengths of interest, all modes other than the propagation mode of interest, so as to provide a filtered light,
- means for extracting (10, 11, 12, 13), from the filtered light, and for the wavelengths of interest, information about phase differences between components of a wavefront division of the reflected light.

9. Measuring device according to claim 8, **characterized in that** it comprises moreover means for displacing (15) the illumination over the surface of the object.

10. Measuring device according to claim 8 or 9, **characterized in that** the outward (2) and return (8) guidance means comprise monomode optical fibres.

11. Measuring device according to one of claims 8 to 10, **characterized in that** the illumination means (3) and the collection means (6) are merged, and **in that** it comprises moreover a coupler, Y-junction or circulator (9) separating the emitted light and the collected light.

12. Measuring device according to one of claims 8 to 11, **characterized in that** the extraction means include a Michelson interferometer.

13. Measuring device according to one of claims 8 to 12, **characterized in that** it comprises moreover:
- a camera focused on the object,
- means of lighting the object with white light, and
- means for emitting a laser beam pointing a measurement area, emitting in the visible range.

14. Measuring device according to one of claims 8 to 13, **characterized in that** it is coupled to means for etching (25, 27, 28) patterns.

15. Measuring device according to claim 14, **characterized in that** it comprises moreover means for determining (26) an etching end time.

16. Measuring device according to one of claims 14 to 15, **characterized in that** the etching means comprise a plasma etching device.

17. Device according to one of claims 8 to 16, **characterized in that** it is applied to a measurement of the heights of steps between mirrors of a segmented mirror.
